# EUROPEAN PATENT SPECIFICATION

(11) **EP 3 140 093 B1**
(45) Date of publication and mention of the grant of the patent: **22.08.2018**
(21) Application number: 15721193.9
(22) Date of filing: 30.04.2015
(51) Int. Cl.: B29B 17/02, C08J 11/04, C08J 7/02, B29L 31/00, B29K 29/00, B29K 105/26

(54) **METHOD AND APPARATUS FOR RECYCLING LAMINATED GLASS**
VERFAHREN UND VORRICHTUNG ZUR WIEDERVERWERTUNG VON VERBUNDGLAS
PROCÉDÉ ET APPAREIL DE RECYCLAGE DU VERRE FEUILLETÉ

(30) Priority: 05.05.2014 GB 201407892
(43) Date of publication of application: 15.03.2017
(73) Proprietor: Saperatec GmbH, 33611 Bielefeld (DE)
(72) Inventor: LOVIS, Florian, 33611 Bielefeld (DE); SEIBT, Horst, 33611 Bielefeld (DE); KERNBAUM, Sebastian, 33611 Bielefeld (DE)
(74) Representative: Harrison, Robert John
(86) International application number: PCT/EP2015/059599
(87) International publication number: WO 2015/169705

(56) References cited:
- EP-A2- 0 953 418
- DE-A1- 10 301 738
- JP-A- 2003 285 042
- DATABASE CA [Online] CHEMICAL ABSTRACTS SERVICE, COLUMBUS, OHIO, US; 15 July 2010 (2010-07-15), Guangdong Golden Glass Technologies Ltd., Peop. Rep. China: "Method for recovering crystalline silicon cell discs from double-glazed solar module having PVB interlayer", XP002740549, Database accession no. 153 : 92693 -& CN 101 719 529 A (GUANGDONG GOLDEN GLASS TECHNOL GUANGDONG GOLDEN GLASS TECHNOLOGIES LTD) 2 June 2010 (2010-06-02)
- MICHAEL TUPY ET AL: "Windshield recycling focused on effective separation of PVB sheet", JOURNAL OF APPLIED POLYMER SCIENCE, vol. 131, no. 4, 15 February 2014 (2014-02-15), pages n/a-n/a, XP055193522, ISSN: 0021-8995, DOI: 10.1002/app.39879
- DATABASE WPI Week 200827 Thomson Scientific, London, GB; AN 2008-D73940 XP002740550, & JP 2007 284648 A (RAKU KK) 1 November 2007 (2007-11-01)

## Description

### Field of the Invention

The invention comprises a method and apparatus for recycling laminated glass comprising a laminate of at least one glass layer and at least one polymer layer.

### Background of the Invention

Laminated glass is a type of safety glass that holds together when the glass is shattered. In the event of breakage, the glass is typically held in place by a further polymer layer, which may be made of a polymer layer comprising polyvinyl butyral (PVB). Typically, the polymer layer is one or more interlayers sandwiched between two or more glass layers. The interlayer(s) keeps the glass layers bonded to the interlayer, even when one or both of the two glass layers are broken. The high strength of the interlayer prevents the glass layer(s) from breaking up into large sharp pieces.

Laminated glass is typically used in car windscreens, but finds other applications such as in skylights in buildings or in hurricane regions, in which the glass needs to be prevented from shattering when exposed to high winds. The polymer layer also gives the glass a higher sound insulation rating, which means that the laminated glass can also be used near freeways or railway lines to improve the sound insulation of interior rooms.

Bullet-resistant glass is also known which is made of an interlayer of polycarbonate thermoplastic sandwiched between two glass layers. Similarly aircraft windshields use three layers of glass with thick PVB layers sandwiched between the glass layers.

The laminated glasses have many applications, as discussed above. However, disposal of the laminated glass is problematic. The laminated glass used in car windscreens may no longer be disposed in landfill sites in the European Union. One method of recycling is to place the laminated glass into a rolling mill to fragment the laminated glass. The application of heat then melts the laminating plastic in the interlayer, thus allowing both the glass and the laminating plastic layer to be recycled. This requires the application of energy, which is inefficient.

### Prior Art

The use of microemulsions for the separation of laminates is known, for example, from the Applicant's co-pending patent application No. WO 2012/101189, which teaches the separation of layers in laminates from each other. The teachings of that disclosure are directed towards the separation of laminates used in photovoltaic modules and there is no mention of their application to laminated glass.

A number of patent applications are known that deal with the recycling of laminated glass. For example, German patent application No. DE 198 111 99 teaches the dissolution of the entire polymer layer.

German patent No DE 42 13 450 also describes the separation of the polymer layer from glass using a chemical method. The chemicals used include acetic acid and sodium hydroxide solution.

An apparatus for the recycling of shredded laminates comprising at least one polymer layer made of polyvinyl butyral (PVB) and at least one glass layer is known from German Patent Application No. DE 103 01 738 A1. The apparatus shown in the patent application comprises a vat having a separation fluid, a device for adding at least portions of the laminates into the vat, and a sieving device for sieving polymer pieces of the polymer layer from the separation fluid. The separation fluid comprises water with very small quantities (0.001 to 0.001 % by weight) of a catalyzer.

US Patent No 8,530,531 also teaches the use of acetic acid for separating the glass layers. A further separating fluid is know from Chinese Patent Application No CN 101 719 529 A - summarized in Chemical Abstracts Service, Database Accession No. 153 : 92693 which teaches a separation fluid comprising a mixture of water and butyl glycol. The separation fluid in this patent application is used for recovering crystalline silicon cell discs from a double-glazed solar module having a PVB interlayer.

International patent application No. WO 99/02460 uses two filtration steps to separate the materials in a recycling plant. One issue known from the teachings of the international patent application is that the material being recycled tends to clog up the piping in the recycling plant.

European patent application No. EP 2 380 736 teaches a method and apparatus for separating a laminate comprising at least two glass sheets bonded together by at least one polymeric interlayer film made of PVB. The method comprises adhering the laminate using one of the glass sheets to one or more suction cups, and attaching at least one other glass sheet to a fixation means. The laminate is heated above the softening point of the polymeric interlayer film and the suction cups are moved relative to the fixation means, thereby sheering off the interlayer film and separating the glass sheets.

A subsequent step is used to remove any remaining traces of the interlayer polymer film from the glass sheets. This is done at an elevated temperature (50°C to 150°C) and pressure (up to 15 bar), optionally using an organic solvent, such as ethanol or isopropanol. The elevated temperature and pressure require a large amount of energy and furthermore the use of these flammable alcohols means that there is a risk of an explosion.

European Patent Application No EP 0 953 418 (Matsushita) discloses a method for the separation of at least one glass layer in a laminate. The method of this documents teaches placing the laminate in a vat comprising a separation fluid, which is a mixture of water and butyl diglycol. The application fails however to teach the use of the method for polymers made of polyvinyl butyral.

### Summary of the Invention

A method for the separation of at least one polymer layer from at least one glass layer in a laminate is disclosed. The method comprises placing the laminate in a vat comprising a separation fluid. The separation fluid comprises a mixture of water and butyl diglycol.

The polymer layer is made of polyvinyl butyral (PVB). The use of butyl diglycol reduces the risk of an explosion compared to the use of flammable alcohols, such as ethanol and isopropanol alcohol, as known in the prior art.

A method for recycling laminated glass is also disclosed. The laminated glass comprises at least one polymer layer and at least one glass layer. The method comprises shredding the laminated glass to produce glass and residual waste (comprising polymer pieces with embedded glass particles), placing the residual waste in a vat comprising the separation fluid to produce a mixture of glass particles from the glass layers and polymer pieces from the polymer layer and the separation fluid. The method of this disclosure is performed at normal atmospheric pressure and only mildly elevated temperatures (30-50°C), which reduces the amount of energy required for performing the recycling as well as substantially simplifying the apparatus used.

The method further comprises extraction of, washing and drying the polymer pieces from the mixture. The separating fluid and any remaining washing water can be re-cycled, which reduces disposal costs and environmental damage.

An apparatus for the recycling of the laminates is also disclosed. The apparatus comprises a vat having the separation fluid, a device for adding portions of the laminates into the vat and a sieving device for sieving polymer pieces from the separation fluid comprising the separated glass particles.

The apparatus may also comprise a shredding device for shredding the laminated glass and removal of a substantial proportion of the glass particles, prior to transportation of the objects comprising the polymer pieces with remaining ones of the glass particles to the vat.

### Description of the figures

Fig. 1 shows one illustrative example of a laminated glass, which is recycled using the method of this disclosure.
Fig. 2 shows a flow diagram of the method using the teachings of this disclosure.
Fig. 3 shows an overview of the apparatus for recycling using the teachings of this disclosure.

### Detailed description of the invention

The invention will now be described on the basis of the drawings. The invention is defined by the claims.

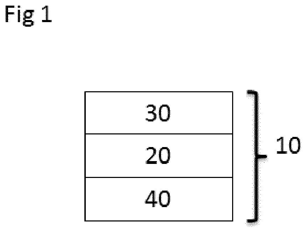

Fig. 1 shows a non-limiting example of a laminate 10 used in a car window glass. The laminate 10 comprises a polymer layer 20, which is laminated as an interlayer between a first glass layer 30 and a second glass layer 40.

The laminate 10 is used, in one aspect of the invention, in a car windscreen (also called windshield). It was noted in the introduction that the laminates also find application in a number of other fields and the teachings of this disclosure are not limited to laminated glass for car windscreens. In a further aspect of the invention, the laminate 10 comprises three glass layers between which two polymer layers are interlaid.

In one non-limiting example of the invention, the polymer layer 20 is made of polyvinyl butyral (PVB), which is typically used in car windscreens. Other thermoplastics can be used as the polymer layer.

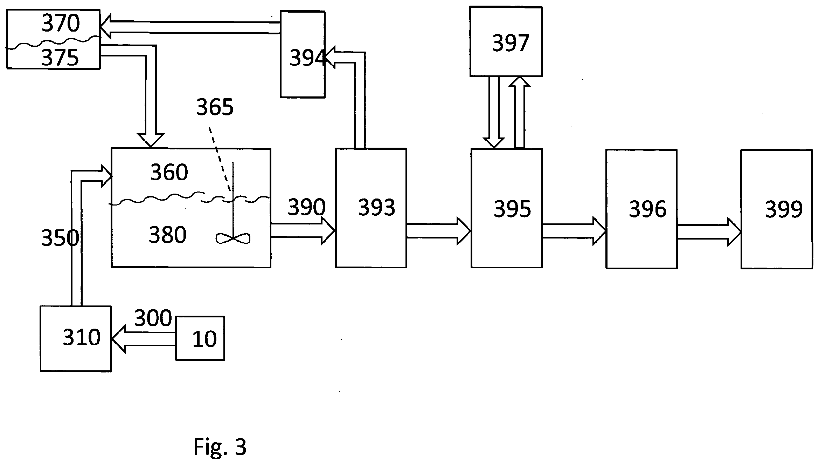

Fig. 3 shows an example of a recycling plant for the recycling of the laminates 10. It will be appreciated that the plant shown in Fig. 3 is merely exemplary and is not limiting of the invention. The plant includes a shredder 310 and a vat 360. The shredder 310 crushes and shreds the glass laminate 10 mechanically. The vat 360 has a fluid dispenser 370 for dispensing separating fluid 375 into the vat 360 and a mixing device 365. The vat 360 has an outlet 390 for removing materials 380 from the vat 360. It will be noted that the shredder 310 and the vat 360 do not need to be co-located. In one aspect of the invention, at least some of the elements of the plant will have anti-adhesive PTFE coatings, which reduces the risk of clogging of the pipework in the plant. The outlet 390 leads to a sieving device 393 to sieve out the polymer pieces, a washing device 395 and a drying device 396. Device 399 represents schematically a device to package and reuse the polymer pieces, which could be an extruder or a melting device.

Washing water from the washing device 395 can be treated in a treatment device 397 to enable reuse of the washing water. A filtering device 394 is connected to the sieving device 393 to clean used separating fluid 375 from glass particles and return the filtered separating fluid 375 back to the fluid dispenser 370 for re-use.

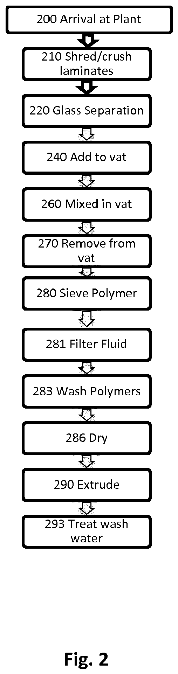

Fig. 2 shows an outline of the method for recycling of the glass laminates 10 of this disclosure. The glass laminates 10 are collected together as portions 300 of the glass laminates 10. On arrival in step 200 at the recycling plant, the glass laminates 10 are placed into the shredder 310 and crushed or shredded in step 210 to produce glass from the glass layer 30 and 40, as well as pieces of the polymer layer 20 with residual particles of glass (350), partially impregnated therein as splinters.

The pieces of the polymer layer 20 are separated in step 220 from the glass of the glass layers 30, 40. The glass is recycled, as is known in the art. In step 240, the remaining laminate portions comprising the polymer pieces with the residual glass particles 350 are added to the vat 360 with a separation fluid 375 from the fluid dispenser 370. The mixture of the separation fluid 375 and the polymer pieces is then mixed in step 260 in the vat 360. The effect of the separation fluid 375 is thought to be to swell the surface of the polymer pieces and thus "expel" the glass particles from the surface of the polymer pieces. This is achieved at a given temperature, for example between 0°C and 50°C, at atmospheric pressure during a treatment time of between 10 and 180 minutes.

The material 380 comprising the separating fluid 375 and the polymer pieces, as well as any residual glass pieces, can be removed in step 270 from the vat 360. The polymer pieces can be removed in step 280 by sieving in device 393. It will be noted that the separating fluid 375 and any residual glass pieces pass through the device 393. The separating fluid 375 is then filtered with device 394 for recycling in step 281 and placed back into the fluid dispenser 370. The filtering step 281 removes substantially all of the residual glass pieces and any other impurities from the separating fluid 375.

The polymer pieces are washed in washing water in step 283 in a washer 395 and dried in step 286 in the dryer 396. The polymer pieces can be extruded or packaged for reuse in step 290, e.g. for use in the manufacture of new windshields. The washing water needs to be treated in step 293 before the water is also reused. The treatment of the washing water is done by filtering out any glass and other impurity particles from the washing water and by removing any remaining separating fluid from the washing water in the treatment device 397. The filtering and the removal of the separating fluid is done, for example, by regular and/or cross flow filtration techniques and reverse osmosis, which allows reclaiming chemicals of the separation fluid from the washing water.

The separation fluid 375 used in the vat 360 and coming from the fluid dispenser 370 is a solution of a water-soluble alcohol in water. Non-limiting examples of such water-soluble alcohols include lower alcohols such as methanol, ethanol, n-propanol, isopropanol, n-butanol, sec.-butanol, tert.-butanol and 2-methylpropanol, pentanols, benzyl alcohol, glycol ethers such as methyl glycol, ethyl glycol, propyl glycol, isopropyl glycol, butyl glycol, butyl diglycol, butyl triglycol, methyl diglycol, methyl triglycol, ethyl diglycol, phenyl glycol, phenoxy propanol, methoxy propanol, methoxy butanol, ethoxy propanol, propylene glycol butyl ether, di(propylene glycol) butyl ether, tri(propylene glycol) methyl ether, tri(propylene glycol) butyl ether and others, such as diacetone alcohol or ethyl lactate.

The separation fluid 375 is kept between 0 and 50°C, and at pH values of around 7. The speed of the reaction depends to a large extent on the diffusion rate into the surface of the polymer layer, which itself is governed by the choice of the alcohol, the concentration of the alcohol, and the temperature.

### Examples of the separating fluid and process conditions

The examples listed below are merely illustrative examples of a suitable separating fluid and the process conditions and are not limiting of the invention.

A 25% solution of butyl diglycol in water was used as the separating medium 375. The treatment time was 2 hours at 40°C at normal atmospheric pressure.

A 25% solution of butyl diglycol in water was used as the separating medium 375. The treatment time was 3 hours at 30°C at normal atmospheric pressure.

A 25% solution of butyl diglycol in water was used as the separating medium 375. The treatment time was 2 hours at 35°C at normal atmospheric pressure.

A 20% solution of butyl diglycol in water was used as the separating medium 375. The treatment time was 2 hours at 40°C at normal atmospheric pressure.

## Claims

1. A method for recycling laminated glass (10) comprising at least one polyvinyl butyral (PVB) layer (20) and at least one glass layer (30, 40), wherein the method comprises:
shredding (210) the laminated glass (10) to produce glass and residual waste (350) comprising PVB pieces with embedded glass particles;
adding (240) the residual waste (350) in a vat (360) comprising a separation fluid (375) to produce a mixture of glass particles from the glass layers (30, 40) and PVB pieces from the one polyvinyl butyral (PVB) layer (20), the separation fluid (375) comprising water and butyl diglycol.

2. The method of claim 1, further comprising sieving of (280), washing (283) and drying (286) the PVB pieces from the mixture.

3. The method of any one of claims 1 to 2 further comprising treatment (293) of the washing water to enable re-use of the washing water.

4. The method of any one of claims 1 to 3, further comprising filtering (281) of the separating fluid (375).

5. The method of any one of claims 1 to 4 wherein the concentration of the butyl diglycol in the separation fluid is between 20 and 25%.

6. An apparatus for the recycling of laminates (10) comprising at least one one polyvinyl butyral (PVB) layer (20) and at least one glass layer (30, 40), the apparatus comprising:
a vat (360) having a separation fluid (375), wherein the separation fluid (375) comprises water and butyl diglycol;
a device for adding at least portions of the laminates (10) into the vat (360); and
a sieving device (393) for sieving PVB pieces of the at least one one polyvinyl butyral (PVB) layer (20) from the separation fluid (375).

7. The apparatus of claim 6, further comprising a shredding device (310) for shredding the laminated glass (10) and removal of a substantial proportion of the glass particles prior to adding the PVB pieces with remaining ones of the glass particles to the vat (360).

8. The apparatus of claim 6 or 7 further comprising an extruder (399) for extruding (290) the PVB pieces.

9. The apparatus of one of claims 6 to 8 further comprising at least one of a washer (395) or dryer (396) to treat the PVB pieces.

10. The apparatus of one of claims 6 to 9, further comprising a filtering device (394) to filter the separating fluid (375).

11. The apparatus of one of claims 6 to 10, further comprising a treatment device (397) for treating the washing water.

12. A combination of a separation fluid (375) and a laminate (10) comprising at least one polyvinyl butyral (PVB) layer (20) and at least one glass layer (30, 40), the separation fluid (375) comprising a mixture of water and butyl diglycol.

## Patentansprüche

1. Verfahren zum Recycling von Verbundglas (10), umfassend mindestens eine Polyvinylbutyral (PVB)-Schicht (20) und mindestens eine Glasschicht (30, 40), wobei das Verfahren umfasst:
Zerkleinern (210) des Verbundglases (10), um Glas und Restabfall (350) umfassend Polyvinylbutyralstücke mit eingebetteten Glaspartikeln zu erzeugen;
Platzieren (240) des Restmülls (350) in einem Bottich (360), der eine Trennflüssigkeit (375) umfasst, um eine Mischung von Glaspartikeln aus den Glasschichten (30, 40) und Polyvinylbutyralstücke aus der Polyvinylbutyral Schicht (20) herzustellen, die Trennflüssigkeit (375) umfasst Wasser und mindestens einen Butyldiglykol.

2. Verfahren nach Anspruch 1, weiterhin umfassend das Sieben (280), Waschen (283) und Trocknen (286) der Polyvinylbutyralstücke aus dem Gemisch.

3. Verfahren nach einem der Ansprüche 1 bis 2, weiterhin umfassend das Behandeln (293) des Waschwassers, um eine Wiederverwendung des Waschwassers zu ermöglichen.

4. Verfahren nach einem der Ansprüche 1 bis 3, weiterhin umfassend das Filtern (281) der Trennflüssigkeit (375).

5. Verfahren nach einem der Ansprüche 1 bis 4, wobei die Konzentration des Butyldiglykols in der Trennflüssigkeit zwischen 20 und 25% ist.

6. Vorrichtung zum Recycling von Laminaten (10), umfassend mindestens eine Polyvinylbutyral (PVB)-Schicht (20) und mindestens eine Glasschicht (30, 40), wobei die Vorrichtung umfasst:
einen Bottich (360) mit einer Trennflüssigkeit (375), wobei die Trennflüssigkeit (375) Wasser und mindestens einen Butyldiglykol umfasst;
eine Vorrichtung zum Hinzufügen von zumindest Abschnitten der Laminate (10) in den Bottich (360); und
eine Siebvorrichtung (393) zum Sieben (280) der Polyvinylbutyralstücke der mindestens einen Polyvinylbutyral Schicht (20) aus der Trennflüssigkeit (375)

7. Vorrichtung nach Anspruch 6, weiter umfassend eine Zerkleinerungsvorrichtung (310) zum Zerkleinern des Verbundglases (10) und zum Entfernen eines wesentlichen Anteils der Glaspartikel vor dem Hinzufügen der Polyvinylbutyralstücke mit den restlichen Glaspartikeln in den Bottich (360).

8. Vorrichtung nach einem der Ansprüche 6 bis 7, weiter umfassend einen Extruder (399) zum Extrudieren (290) der Polyvinylbutyralstücke.

9. Vorrichtung nach einem der Ansprüche 6 bis 8, weiter umfassend mindestens eine Waschvorrichtung (395) oder einen Trockner (396) zum Behandeln der Polyvinylbutyralstücke.

10. Vorrichtung nach einem der Ansprüche 6 bis 9, weiter umfassend eine Filtervorrichtung (394) zum Filtern der Trennflüssigkeit (375).

11. Vorrichtung nach einem der Ansprüche 6 bis 10, weiter umfassend eine Behandlungsvorrichtung (397) zum Behandeln des Waschwassers.

12. Kombination aus einer Trennflüssigkeit (375) und einem Laminat (10) umfassend mindestens eine Polyvinylbutyral (PVB) - Schicht (20) und mindestens eine Glasschicht (30, 40), wobei die Trennflüssigkeit (375) eine Mischung aus Wasser und Butyldiglykol umfasst.

## Revendications

1. Procédé pour recycler du verre feuilleté (10) comprenant au moins une couche (20) de polyvinyl butyral (PVB) et au moins une couche de verre (30, 40), dans lequel le procédé comprend :
réduire en morceaux (210) le verre feuilleté (10) pour produire du verre et un déchet résiduel (350) comprenant des pièces PVB avec des particules de verre encastrées ;
ajouter (240) le déchet résiduel (350) dans une cuve (360) comprenant un fluide de séparation (375) pour produire un mélange de particules de verre à partir des couches de verre (30, 40) et des pièces PVB à partir de la couche (20) de polyvinyl butyral (PVB), le fluide de séparation (375) comprenant de l'eau et du butyl diglycol.

2. Procédé selon la revendication 1, comprenant en outre tamiser (280), laver (283) et sécher (286) les pièces PVB depuis le mélange.

3. Procédé selon l'une quelconque des revendications 1 à 2, comprenant en outre le traitement (293) de l'eau de lavage pour permettre la réutilisation de l'eau de lavage.

4. Procédé selon l'une quelconque des revendications 1 à 3, comprenant en outre le filtrage (281) du fluide de séparation (375).

5. Procédé selon l'une quelconque des revendications 1 à 4, dans lequel la concentration de butyl diglycol dans le fluide de séparation est comprise entre 20 et 25%.

6. Appareil de recyclage de feuilletés (10) comprenant au moins une couche (20) de polyvinyl butyral (PVB) et au moins une couche de verre (30, 40), l'appareil comprenant :
une cuve (360) ayant un fluide de séparation (375), dans lequel le fluide de séparation (375) comprend de l'eau et du butyl diglycol;
un dispositif pour ajouter au moins des parties des laminés (10) dans la cuve (360) ; et un dispositif de tamis (393) pour tamiser les pièces PVB de la au moins une couche (20) de polyvinyl butyral (PVB) depuis le fluide de séparation (375).

7. Appareil selon la revendication 6, comprenant en outre un dispositif de réduction en morceaux (310) pour réduire en morceaux le verre feuilleté (10) et retirer une proportion substantielle de particules de verre avant d'ajouter dans la cuve les pièces PVB avec les particules restantes des particules de verre (360).

8. Appareil selon la revendication 6 ou 7, comprenant en outre un extrudeur (399) pour extruder (290) les pièces PVB.

9. Appareil selon l'une quelconque des revendications 6 à 8, comprenant en outre au moins l'un d'un dispositif de nettoyage (395) ou d'un dispositif de séchage (396) pour traiter les pièces PVB.

10. Appareil selon l'une quelconque des revendications 6 à 9, comprenant en outre un dispositif de filtration (394) pour filtrer le fluide de séparation (375).

11. Appareil selon l'une quelconque des revendications 6 à 10, comprenant en outre un dispositif de traitement (397) pour traiter l'eau de lavage.

12. Combinaison d'un fluide de séparation (375) et d'un feuilleté (10) comprenant au moins une couche (20) de polyvinyl butyral (PVB) et au moins une couche de verre (30, 40), le fluide de séparation (375) comprenant un mélange d'eau et de butyl diglycol.
